# EUROPEAN PATENT SPECIFICATION

(11) **EP 4 102 897 B1**
(45) Date of publication and mention of the grant of the patent: **09.07.2025**
(21) Application number: 22175696.8
(22) Date of filing: 27.05.2022
(51) Int. Cl.: H04W 52/42, H04W 52/36, H04W 52/28

(54) **BEAM CONFIGURATION FOR NEAR FIELD BLOCKAGE**
STRAHLKONFIGURATION FÜR NAHFELDBLOCKIERUNG
CONFIGURATION DU FAISCEAU POUR LE BLOCAGE EN CHAMP PROCHE

(30) Priority: 07.06.2021 FI 20215663
(43) Date of publication of application: 14.12.2022
(73) Proprietor: Nokia Technologies Oy, 02610 Espoo (FI)
(72) Inventor: CAPORAL DEL BARRIO, Samantha, 9000 Aalborg (DK); SVENDSEN, Simon, 9000 Aalborg (DK)
(74) Representative: Kolster Oy Ab

(56) References cited:
- WO-A1-2020/259852
- NOKIA ET AL: "Enhancements on Multi-beam Operation", vol. RAN WG1, no. e-Meeting; 20201023 - 20201113, 24 October 2020 (2020-10-24), XP051946720, Retrieved from the Internet <URL:https://ftp.3gpp.org/tsg_ran/WG1_RL1/TSGR1_103-e/Docs/R1-2008903.zip R1-2008903 Multi-Beam Enhancements_Rel17.docx> [retrieved on 20201024]

## Description

### Field

The following exemplary embodiments relate to wireless communication and beam configuration of antennas of a device capable of wireless communication.

### Background

Wireless communication networks, such as cellular communication networks, allows devices to freely move from one area to another. Data transmitted using wireless communication network uses antennas and the radiation caused may be towards a blockage such as a user for example. Thus, it is beneficial to direct the radiation away from the blockage.

WO 2020/259852 discloses solutions on signaling a power back off to the wireless communication network.

Nokia et al: "Enhancements on Multi-beam Operation", 3GPP Draft; R1-2008903, 3rd Generation Partnership Project (3GPP), Mobile Competence Centre, 650, route des Lucioles, F-06921 Sophia-Antipolis Cedex, France, vol. RAN WG1, no. e-Meeting; 20201023 - 20201113, 24 October 2020, describes that maximum permissible exposure (MPE) events may impact uplink performance and therefore it should be signaled to the wireless communication network.

### Brief Description

The scope of protection sought for various embodiments of the invention is set out by the independent claims.

According to claim 1 there is provided an apparatus comprising means for: measuring a distance to a blockage using a radar functionality of an antenna array, determining, based on the distance, that transmission power is to be limited due to a maximum permissible exposure event, determining if the distance is greater or shorter than a threshold distance which corresponds to a far-field distance of a radiation pattern used for the radar functionality and performing one of the following: if the distance is greater than the far-field distance, determining an angular direction of an incoming signal comprised in the radar functionality and optimizing the antenna array configuration for a beam used for uplink transmission to an access node, or if the distance is shorter than the far-field distance and the distance is greater than a minimum distance for obtaining reliable angular directions of the blockage using the radar functionality, reducing the number of elements used for the radar functionality, wherein the elements are comprised in the antenna array, measuring the distance to the blockage using the radar functionality of the antenna array, determining based on the distance, that the transmission power is to be limited due to the maximum permissible exposure event, determining that the distance is greater than the threshold distance which corresponds to the far-field distance of the radiation pattern used for the radar functionality, and determining the angular direction of the incoming signal comprised in the radar functionality and optimizing the antenna array configuration for the beam used for uplink transmission to the access node, or if the distance is shorter than the far-field distance and the distance is less than the minimum distance for obtaining reliable angular directions of the blockage using the radar functionality, determining which elements, comprised in the antenna array, are covered by the blockage and optimizing the antenna array configuration for a beam used for uplink transmission to an access node.

According to claim 9 there is provided a method comprising measuring a distance to a blockage using a radar functionality of an antenna array, determining, based on the distance, that transmission power is to be limited due to a maximum permissible exposure event, determining if the distance is greater or shorter than a threshold distance which corresponds to a far-field distance of a radiation pattern used for the radar functionality and performing one of the following: if the distance is greater than the far-field distance, determining an angular direction of an incoming signal comprised in the radar functionality and optimizing the antenna array configuration for a beam used for uplink transmission to an access node, or if the distance is shorter than the far-field distance and the distance is greater than a minimum distance for obtaining reliable angular directions of the blockage using the radar functionality, reducing the number of elements used for the radar functionality, wherein the elements are comprised in the antenna array, measuring the distance to the blockage using the radar functionality of the antenna array, determining based on the distance, that the transmission power is to be limited due to the maximum permissible exposure event, determining that the distance is greater than the threshold distance which corresponds to the far-field distance of the radiation pattern used for the radar functionality, and determining the angular direction of the incoming signal comprised in the radar functionality and optimizing the antenna array configuration for the beam used for uplink transmission to the access node, or if the distance is shorter than the far-field distance and the distance is less than the minimum distance for obtaining reliable angular directions of the blockage using the radar functionality, determining which elements, comprised in the antenna array, are covered by the blockage and optimizing the antenna array configuration for a beam used for uplink transmission to an access node.

According to claim 15 there is provided a computer program comprising instructions stored thereon for performing at least the following: measuring a distance to a blockage using a radar functionality of an antenna array, determining, based on the distance, that transmission power is to be limited due to a maximum permissible exposure event, determining if the distance is greater or shorter than a threshold distance which corresponds to a far-field distance of a radiation pattern used for the radar functionality and performing one of the following: if the distance is greater than the far-field distance, determining an angular direction of an incoming signal comprised in the radar functionality and optimizing the antenna array configuration for a beam used for uplink transmission to an access node, or if the distance is shorter than the far-field distance and the distance is greater than a minimum distance for obtaining reliable angular directions of the blockage using the radar functionality, reducing the number of elements used for the radar functionality, wherein the elements are comprised in the antenna array, measuring the distance to the blockage using the radar functionality of the antenna array, determining based on the distance, that the transmission power is to be limited due to the maximum permissible exposure event, determining that the distance is greater than the threshold distance which corresponds to the far-field distance of the radiation pattern used for the radar functionality, and determining the angular direction of the incoming signal comprised in the radar functionality and optimizing the antenna array configuration for the beam used for uplink transmission to the access node, or if the distance is shorter than the far-field distance and the distance is less than the minimum distance for obtaining reliable angular directions of the blockage using the radar functionality, determining which elements, comprised in the antenna array, are covered by the blockage and optimizing the antenna array configuration for a beam used for uplink transmission to an access node.

### List of Drawings

In the following, the invention will be described in greater detail with reference to the embodiments and the accompanying drawings, in which
FIG. 1 illustrates an exemplary embodiment of a radio access network.
FIG. 2 illustrates a comparison of achievable spherical coverages of a terminal device when one antenna panel is used and when three antenna panels are used.
FIG. 3 illustrates an exemplary embodiment of a distance to a user triggering a power back-off.
FIG. 4 illustrates an exemplary embodiment of downsizing an antenna array.
FIG. 5 and 6 illustrate exemplary embodiments of steering an array beam.
FIG. 7 illustrates a flow chart according to an exemplary embodiment.
FIG. 8A-8B illustrate simulations of power density.
FIG. 9A-9C illustrate simulations of power density.
FIG. 10A-10C illustrate simulations of power density.
FIG. 11 illustrates an exemplary embodiment of analysis results
FIG. 12A-12C illustrate simulations of power density.
FIG. 13 illustrates an exemplary embodiment of analysis results
FIG. 14A-14C illustrate simulations of power density.
FIG. 15 illustrates an exemplary embodiment of analysis results
FIG. 16A-16C illustrate simulations of power density.
FIG. 17A-17D illustrate simulations of power density.
FIG. 18 illustrates an exemplary embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, and/or a fifth generation (5G) mobile or cellular communication system. The embodiments are not, however, restricted to the system given as an example but a person skilled in the art may apply the solution to other communication systems provided with necessary properties.

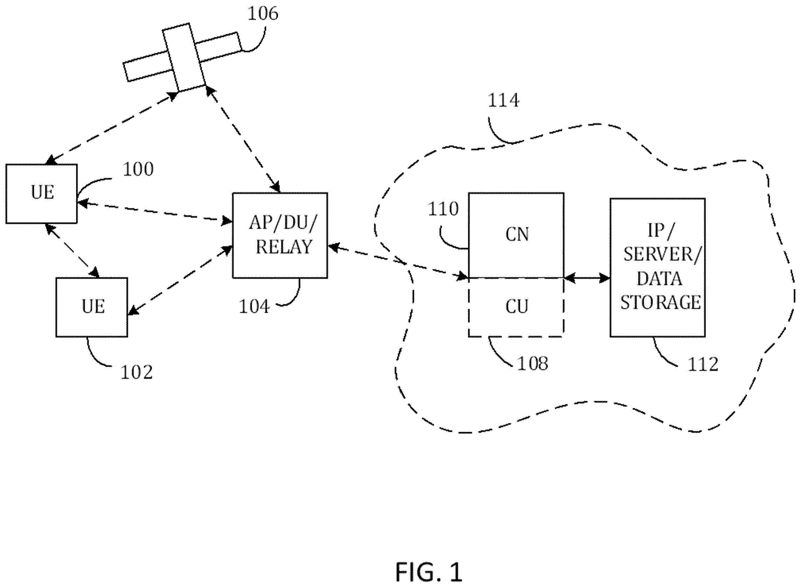

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a node. The physical link from a terminal device to a (e/g)NodeB is called uplink or reverse link and the physical link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require to bring the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Possible use cases comprise providing service continuity for machine-to-machine (M2M) or Internet of Things (IoT) devices or for passengers on board of vehicles, and/or ensuring service availability for critical communications, and/or future railway/maritime/aeronautical communications. Satellite communication may utilise geostationary earth orbit (GEO) satellite systems, but also low earth orbit (LEO) satellite systems, for example, mega-constellations (systems in which hundreds of (nano)satellites are deployed). A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized. HAPS may be understood as radio stations located on an object at an altitude of 20-50 kilometres and at a fixed point relative to the Earth. Alternatively, HAPS may also move relative to the Earth. For example, broadband access may be delivered via HAPS using lightweight, solar-powered aircraft and airships at an altitude of 20-25 kilometres operating continually for several months for example.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells.

A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

A terminal device capable of connecting to a wireless network may comprise a plurality of antenna panels. The plurality of antenna panels may be located for example at various sides of the terminal device. In some exemplary embodiments, there may be an antenna panel at the top of the terminal device and two other antenna panels may be located at opposite sides of the terminal device. The plurality of antenna panels may be used for example to enable mmWave, such as frequency range 2, FR2 24-52,6 GHz, operation of the terminal device. The multiple antenna panels may perform beam steering over a large solid angle. The usage of a plurality of antenna panels may enable a spherical coverage of the terminal device at the mmW frequencies while using a single panel enables transmitting and receiving from a limited number of angles instead of a spherical coverage.

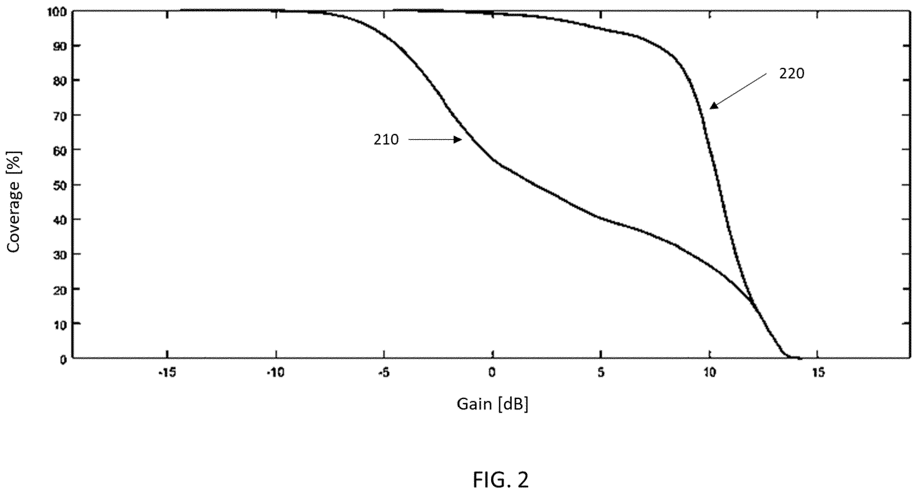

FIG. 2 illustrates a comparison of achievable spherical coverages of a terminal device when one antenna panel is used and when three antenna panels are used. In this exemplary embodiment, each antenna panel comprises 8x1 patch arrays. The line 210 illustrates the usage of one antenna panel, which in this exemplary embodiment is a front panel. The line 220 illustrates using three antenna panels that in this exemplary embodiment are a right antenna panel, a left antenna panel and a front antenna panel. As can be seen, when using one antenna panel, 25 % of a sphere is covered with 10 dB gain.

When using three antenna panels, about 60 % of the directions of the sphere can be reached with a 10 dB gain.

In many jurisdictions, there are exposure guidelines in place to prevent health issues due to thermal effects. A Maximum Permissible Exposure (MPE) is a regulation on power density for the mmWave regime and the threshold limit for MPE may be set for example at 10 W/m2 (1 mW/cm2). In other words, a terminal device may determine that the terminal device is to limit its transmission power due to an MPE event which may be understood as a situation in which MPE is applicable. For a certain distance separating the human tissue from the antenna, a Power Back-Off (PBO) may be required for compliance with MPE. However, the required PBO may be rather large such as up to 30 dB for devices transmitting at the maximum Effective Isotropic Radiated Power (EIRP) limit, such as 43dBm, and may cause Radio Link Failures (RLF), since this back-off may degrade the uplink such that the maximum number of Radio Link Control (RLC) retransmissions is reached.

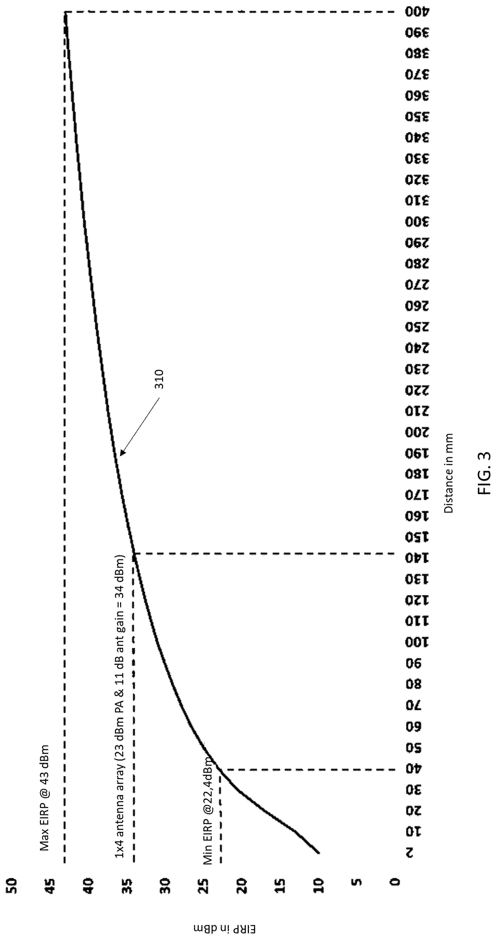

PBO may be triggered at different distances between a user and an antenna panel, which may depend on the EIRP. FIG. 3 provides an exemplary illustration of this. The line 310 illustrates maximum allowed EIRP during situations in which MPE limits are applicable at different distances to a user or another object. For example, a 4x1 antenna array exhibiting EIRP of 34 dBm (23 dBm maximum power amplifier (PA) output power and 11 dB array gain) may require a PBO when a user is located less than 14 cm away from the antenna. When the user is nearly touching the antenna panel, such as there being 2 mm separation between the user and the antenna panel, the maximum allowed EIRP may be 10 dBm and hence the power is to be backed-off by 24 dB. PBO applies to UL and may therefore result in severe link imbalance between UL an DL budgets. Thus, when a situation, in which MPE limitation applies, that is an MPE event, is triggered at the terminal device, the terminal device applies Power Management-Maximum Power Reduction (P-MPR) and sends Power Headroom Report comprising P-MPR information to the network. This is a re-active MPE mitigation mechanism. In the re-active mechanism, the MPE events are signalled to the network after they have been detected at the terminal device, that is, the network is aware of the MPE event after it has already occurred. When the MPE compliance mode is triggered, due to for example detecting the user in close proximity of the active array, the terminal device is to perform a PBO. Thereafter, the terminal device signals the MPE event to the network, that is to an access node such as a gNB, in the next Power Headroom (PHR). Yet, the PBO applied decreases the likelihood of the gNB decoding the signal.

In case a terminal device comprises multiple antenna panels, it is to be noted though that in FR2 each panel has inherent directivity. Thus, non-MPE panels comprised in the terminal device may be likely to point in another direction than towards a serving access node such as a gNB. Further, switching to another panel to send PHR may not necessarily increase the likelihood of the serving access node decoding the signal. Therefore, there is a need to transmit the PHR signalling comprising the MPE information to the serving access node after having applied the power back-off while maximizing the probability of the access node decoding the MPE message.

A distance between an antenna array and a user, or an object, is thus to be determined. The user or an object that is in the proximity of the antenna array, that is comprised in the at least one antenna panel comprised in a terminal device, and to which a distance is to be determined, may be understood as a blockage. The distance between the antenna array and the blockage may be determined using a radar functionality embedded in the antenna array by measuring a delay of the reflected radar signal, in other words, by performing a delay measurement. In general, radar functionality may use radio waves to determine a distance, angle, and/or velocity of objects. However, the radar might not always be able to determine the angular direction of the blockage, even when using narrow beam sweeping. That is because the angular direction is based on the radiation pattern, which is a far-field property of antennas. Therefore, as soon as the object is closer than the far-field distance, the far field radiation pattern may not be able to provide trustworthy angular direction indication. The angular direction of the blockage may be understood as indicating the offset of the direction of the blockage with respect to the centre of the antenna array.

MPE on the other hand is related to near-field aspect instead of far-field and therefore far-field radiation patterns may not be useful for indicating the angular direction of MPE event triggering blockage. Table 1 below illustrates how an antenna array, in this example a 1x8 antenna array that is configured for maximum gain, that is, all 8 antenna elements are active, results in a far field distance that is beyond a triggering distance for MPE. If the array size decreases, the far-field distance decreases accordingly. Yet, a half-power beamwidth proportionally increases and an angular direction detection of the blockage still remains uncertain. For example, a 1x2 array may not locate the angular direction of the blockage more accurately than a 90-degree angle in the azimuth cut and may still not be used less than 12 mm away.

**Table 1.**

| **Array size** | **Diagonal of Patches (D)** | **Far-Field distance @28 GHz** | **MPE triggering distance** |
|---|---|---|---|
| 1x8 | 40.0 mm | ≈ 300 mm | ≈ 200 mm |
| 1x4 | 18.6 mm | ≈ 65 mm | ≈ 140 mm |
| 1x2 | 8.1 mm | ≈ 12 mm | ≈ 100 mm |

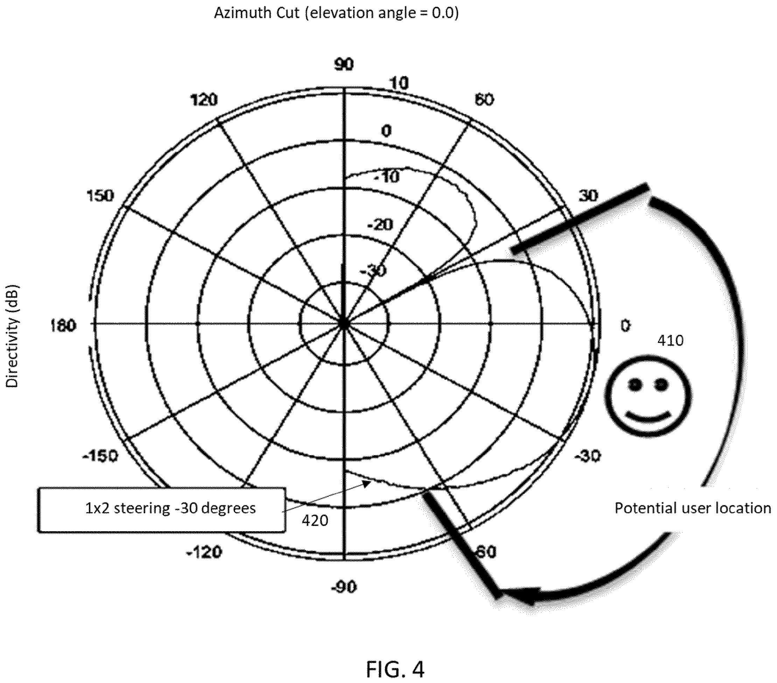

FIG. 4 illustrates an exemplary embodiment of how downsizing the antenna array to reduce far-field distance below location of a blockage, in this exemplary embodiment a user 410, results in widening the beamwidth 420 in addition to increasing inaccuracy of the determined location.

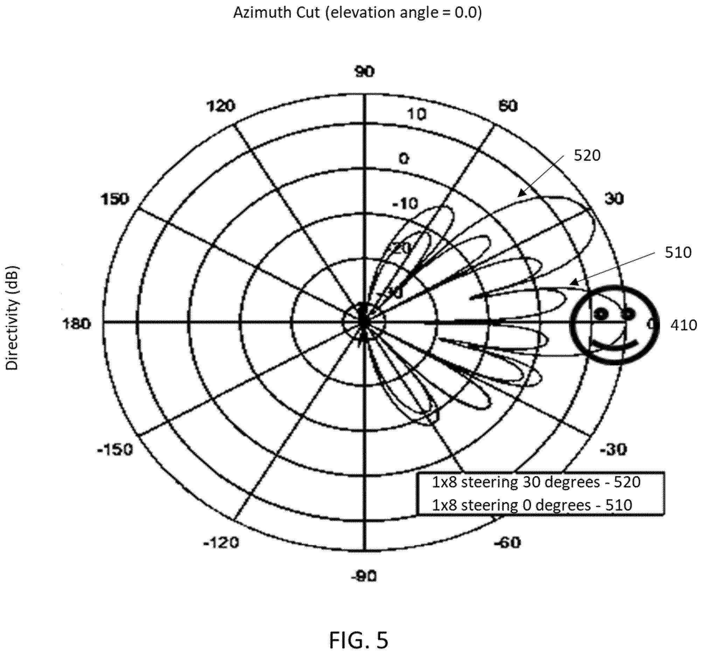

To mitigate MPE towards the user 410, the beam may be steered away from the user 410. This steering may be performed based on the far-field radiation pattern, which however may not be correct if the user 410 is actually located in a near-field. It is to be noted that far-field and near-field may be determined based pre-determined criteria if a field is to be considered near-field or far-field. The criteria may be for example distance from the antenna array or any other suitable criteria. Values of far-field radiation may not be mapped to near-field values. Therefore, a situation may occur in which calculations done based on far-field patterns that indicate that the array beam can be steered away from the user to decrease power density at a given distance may not be applicable if the user is in a near-field instead of far-field. This is illustrated in FIG. 5, in which the user 410 triggers MPE on the beam illustrated by the line 510; steering the pattern at 30 degrees, as illustrated by the line 520, will decrease the power density at the user 410, but the dB difference of the far-field radiation patterns for MPE power reduction optimization may be valid only if the user 410 is also located in the far-field, which in this exemplary embodiment is at least from 30 cm away. However, the location of the user that causes MPE limitations to be applicable may at some point in time be in the near-field of the configured beam produced by the terminal device and thus it is desirable to take this into account when optimizing the required power back-off level.

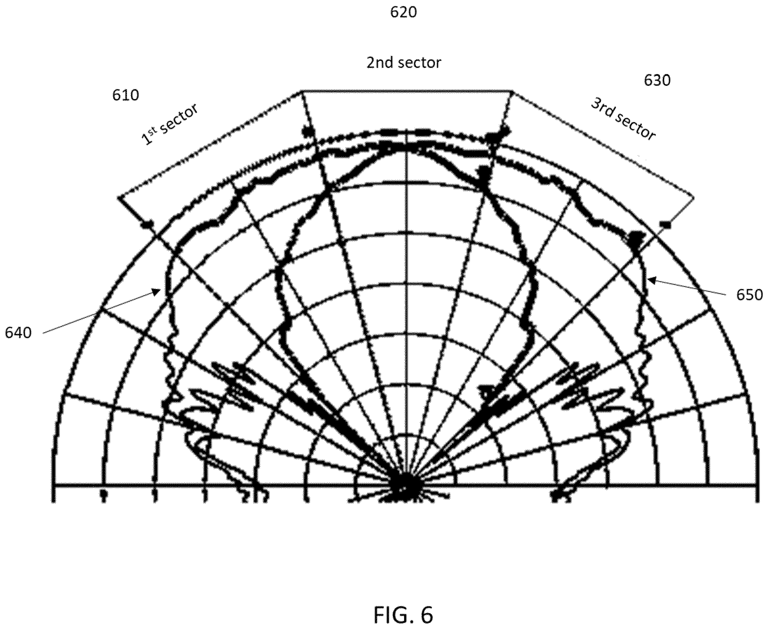

Thus, an approach to configure a serving antenna array under MPE constraint to form a pattern that maximizes the output power or EIRP, and thereby the likelihood of an access node such as a gNB receiving the MPE event, wherein the pattern is configured to take into account near-field investigations, would be beneficial. To achieve this, an antenna array that may be affected by MPE is to obtain an assessment of a distance and angular direction between the antenna array and a blockage. The assessment may be determined by the antenna array, or it may be determined by the terminal device in which the antenna array is comprised and thus the antenna array may also obtain the assessment. In an exemplary embodiment, two beams may be formed by the antenna array such that the beams overlap, and the array may then utilize delay and power values to estimate the angular direction and distance of the blockage that in this exemplary embodiment is a user. In order to localize the user, an angular position of the user may be determined. Therefore, depending on the user distance, the antenna array first adjusts the antenna aperture, that is the number of used elements in the array, to ensure than the user is in the far-field of the configured radiation pattern. Then, the antenna array steers, sequentially or simultaneously, two different, pre-characterized and known radiation patterns. FIG. 6 provides an illustration of this. In FIG. 6, there is a first sector 610, a second sector 620 and a third sector 630 in which radar radiation pattern and the difference in received power of the two angular direction of the user are mapped to the sectors. It is to be noted that in some alternative exemplary embodiments there may be different number of sectors utilized. The number of sectors utilized may depend on user distance and array codebook. For example, the further the user, in other words, the greater the user distance, the higher the number of sectors. It is to be noted that in this exemplary embodiment, the user covers an area comprising several angles of departure/arrival instead of a single angular direction and the user is located in the first sector 610, the power received from the beam illustrated by the line 640 is larger than what may be received by the beam illustrated by the line 650. Also, if the user is located in the third sector 630, the power received with the beam illustrated by the line 650 is larger than in others. If both beams receive substantially equal amounts of power, the user is located in the second sector 620.

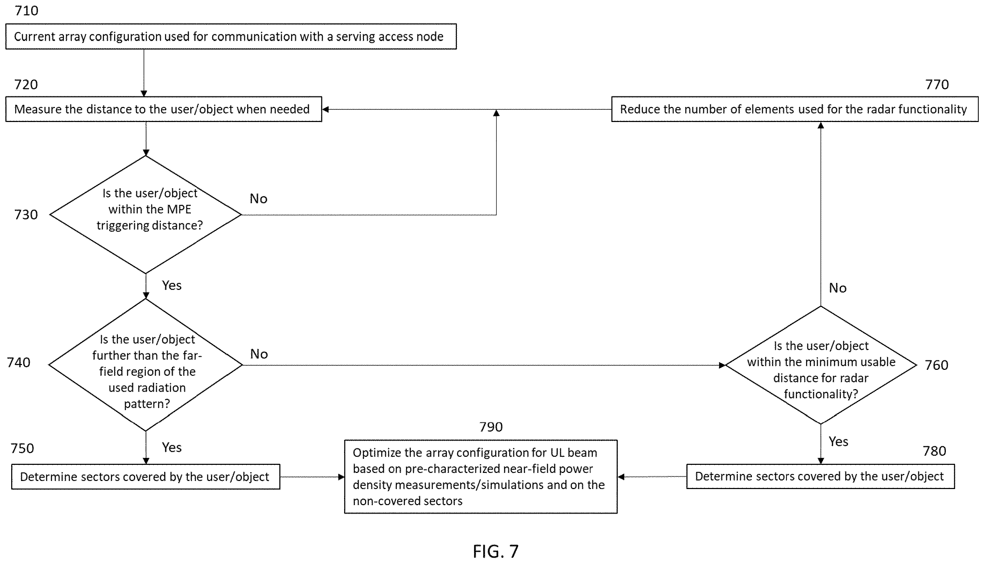

FIG. 7 illustrates a flow chart according to an exemplary embodiment in which far-field radiation pattern is configured based on near-field power density to maximize output power of an antenna array when MPE is to be limited, which may also be understood as MPE being applicable. First, in 710, an antenna array comprised in a terminal device is caused for a given beam to maintain transmission enabling communication with an access node, which in this exemplary embodiment is a gNB. It is to be noted that in some exemplary embodiments it may be determined that a threshold for switching to another beam is not exceed and thus the transmission enabling communication is maintained with the given beam. Next, in 720, the terminal device measures a distance to a blockage that may be a user or an object. The distance is measured using the antenna array as a radar, that is, the distance is measured based on delay estimate or delta phase. It is to be noted that multiple antenna arrays comprised in the terminal device may be used as radars as well. As an initial configuration the full antenna array size may be used for the radar functionality, which may be understood as a delay-based distance estimation. Using the full antenna array size may result in a better estimate of the angular direction of the blockage as the beam may be narrower this way. It is to be noted that periodicity of the proximity radar scans may be dependent on the implementation of the terminal device in order to fulfil MPE requirement. The periodicity may also vary depending on the amount of UL transmissions required. It is also to be noted that the initial configuration may alternatively be done using the broadest beam. The initial configuration may be done during a scheduled UL transmission with a current transmission beam configuration of the terminal device. Alternatively, the initial configuration may be done during UL gaps and the terminal device is free to choose its beam for radar i.e. broad or narrow.

Then, in 730 it is determined if a blockage is determined within a distance that requires limiting the MPE. If yes, then the flow chart moves to 740 in which it is determined if the measured distance to the blockage is further than a minimum distance, which may be a pre-determined distance, for which the radar functionality may be used to obtain reliable angular direction of the blockage. If yes, then in 750 the angular direction of an incoming signal comprised in the radar functionality is determined to determine areas covered by the blockage. The areas may be determined for example by determined covered sectors as described previously. Thus, in 750 the blockage is determined to be in the far-field region of the used radiation patterns for the radar functionality.

If in 730 it is determined that the blockage is not within the distance that requires MPE limitation, then the flow chart returns to 720. If in 740 it is determined that the blockage is not closer than the far-field region of the used radiation pattern, then the flow chart moves to 760 and determines if the blockage is further than the minimum distance where the radar functionality can be used to get reliable angular directions of the blockage. If not, the flow chart moves to 770 in which the number antenna array elements used for the radar functionality is reduced. After this, the flow chart moves again to 720. If in 760 it is determined that the blockage is within the minimum usable distance for radar functionality, then in 780 then the terminal device determines which elements of the antenna array are covered by the blockage and this may comprise determining which sectors are covered by the user as described above. After 780 and also after 750 the flow chart proceeds to 790 in which the terminal device optimizes the antenna array configuration to the transmission beam based on pre-characterized near-field power density measurements and/or simulations and on non-covered sectors. Optimizing the antenna array configuration may comprise applying an angular direction configuration which may be combined with transmission power reduction if needed for a given direction configuration. Therefore, optimizing the antenna array configuration may comprise configuring the antenna array to form a pattern that maximizes the output power or EIRP. It is to be noted that the flow chart comprises a loop 730 and 720 and also another loop 730, 740, 760, 770 and 720. In some exemplary embodiments, at least one of these loops may be performed multiple times or once.

In general, an antenna array comprised in a terminal device may be configured depending on a distance determined to a blockage to exhibit a far-field distance shorter than the location of the blockage to use the radar functionality of the array. The distance to the blockage may first be found with a delay value obtained using radar functionality of the antenna array. The same configuration of the antenna array may be used to compare power values and determine the angular direction of the blockage. A configuration of the antenna array for a transmission beam may then be determined, by the terminal device, depending on the distance and angular direction regarding the blockage. It is to be noted that the configuration may be different than the configuration used for the radar functionality. This way the output power may be maximized while maintaining the radiated power to the blockage below a pre-determined value. This allows to mitigate MPE effects and increase the probability of the access node such as the gNB decoding a message transmitted by the terminal device while MPE is applicable.

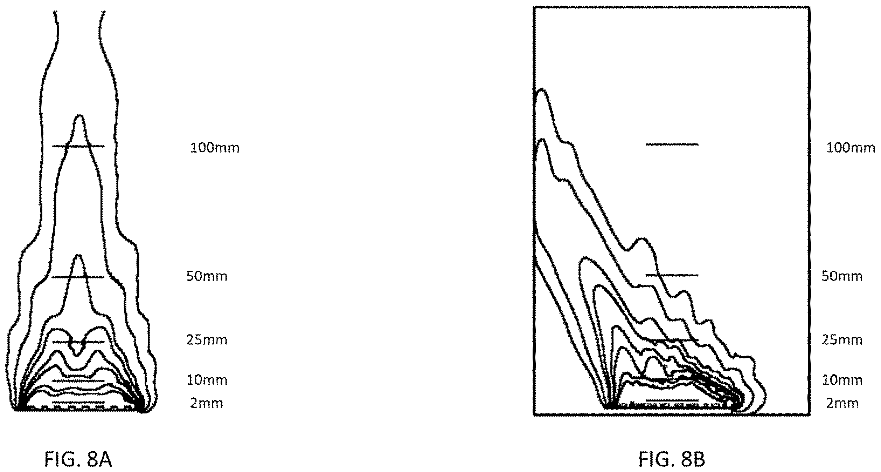

In an exemplary embodiment, a terminal device comprises a 1x8 uniform linear antenna array. A full excitation of the antenna array when it is configured for a boresight may be used as a reference for evaluating power density. MPE may be evaluated as an average power density over a 4*cm*² area at a certain distance from the antenna array and a maximum limit of 1 mW/*cm*². FIG. 8A and 8B illustrate simulations of power density in this exemplary embodiment. FIG. 8A illustrates power density plots of the antenna array for boresight and FIG. 8B for a 30° angular steering direction. The plots illustrate also MPE evaluation areas for a blockage located at the centre of the antenna array at different distances. The MPE evaluation areas are illustrated by the horizontally restricted lines. In these examples the lines illustrate a 2x2 *cm*²surface area and the horizontally restricted lines illustrate a 2cm edge of that surface area, which is located at a physical centre of the antenna array. As can be seen from FIG. 8A and 8B, the power density in this exemplary embodiment is reduced as the distance to the array is increases and shifting the angular direction away from the MPE evaluation area that corresponds to the position of the blockage also decreases the intensity of the power density for greater distances. However, at distances relatively close to the antenna array, the power density does not necessarily decrease with distance. Therefore, the MPE evaluation is to be made on near-field analysis instead of on far-field radiation patterns.

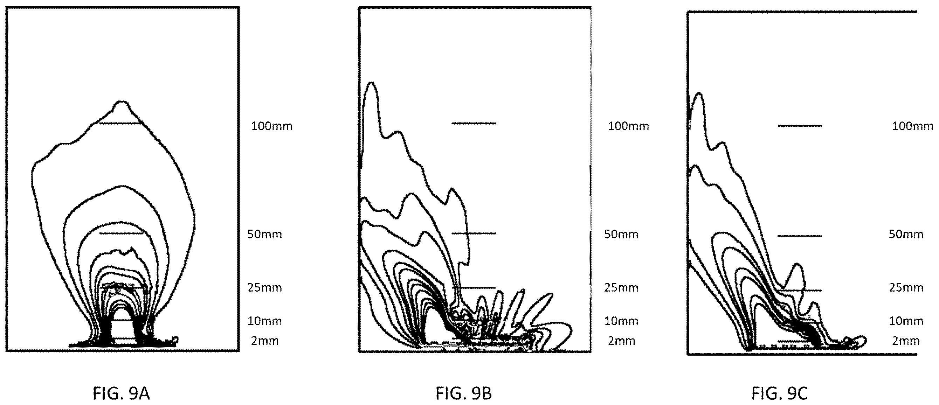

In another exemplary embodiment a different configuration of the 1x8 antenna array comprised in the terminal device may be used. The different configuration may be for example 1x8, 1x4, 1x2 and single patch configurations with different offsets of active elements and beam steering directions. FIG. 9A illustrates a power simulation for a configuration with centre elements 1x2 at boresight, FIG. 9B offset active elements 1x2 with a 30° angular steering direction and FIG. 9C offset active elements 1x4 with a 30° angular steering direction. In some other exemplary embodiments, more steering angles could be evaluated as well.

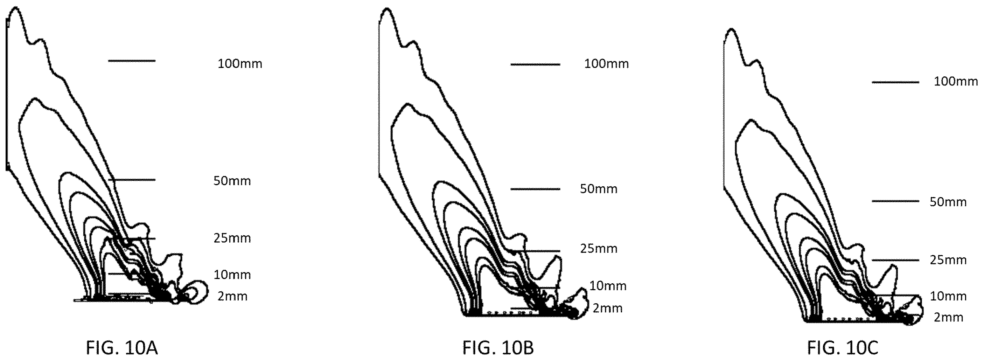

FIG. 10A-10C illustrate power simulations for an antenna array with 1x4 centre configuration steered at 30° angular steering direction. FIG. 10A-10C illustrate the power densities at different distances, such as 2mm - 100 mm, to the blockage, that is, different horizontal locations of MPE evaluation areas. FIG. 10A illustrates MPE evaluation at array centre, FIG. 10B illustrates MPE evaluation horizontally offset by 10 mm to the right and FIG. 10C illustrates MPE evaluation horizontally offset by 20 mm to the right. The different locations of MPE evaluation areas may be directly linked to the different sectors illustrated in FIG. 6 and used when the there is a blockage in those sectors.

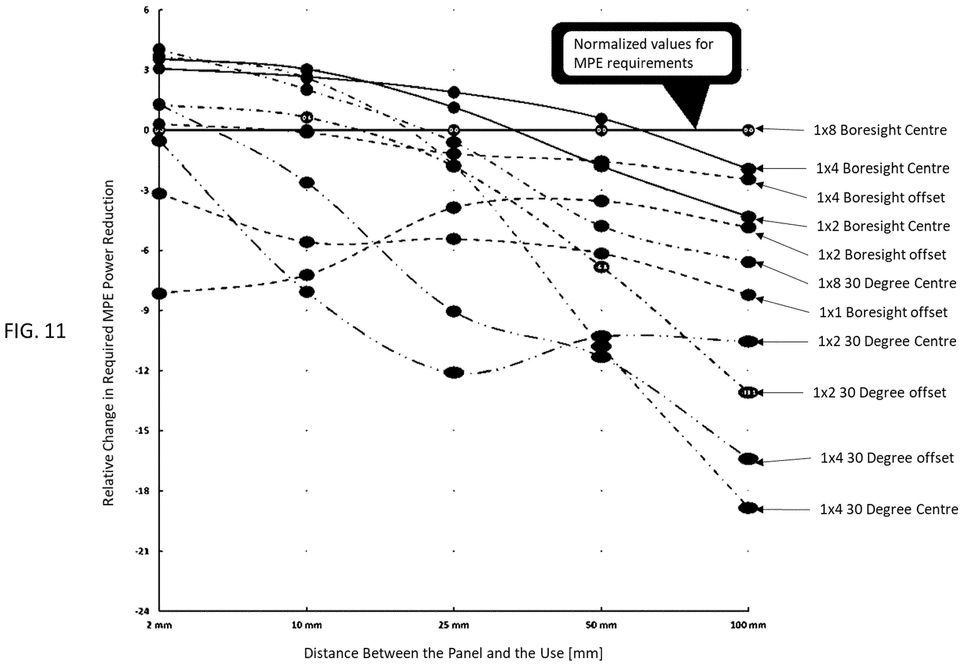

FIG. 11 illustrates an exemplary embodiment of analysis results obtained for configurations of the exemplary embodiment of FIG. 10A. The results are normalized to the reference configuration, which in this exemplary embodiment is a 1x8 array in boresight to illustrate relative changes in required power back-off to comply with the MPE limit for different array configurations. A positive value in the graph illustrated in FIG. 11 indicates that using that array configuration when a blockage is at a given distance to the array will increase the required MPE back-off value compared to the reference configuration in dB and a negative value will indicate a decrease in the required back-off power to comply with MPE limitation requirements. FIG. 11 illustrates changes that may be required in back-off power, relative to the reference configuration, for various antenna array configurations such as 1x2 active elements to 1x8 active elements on the antenna array, centred and offset, at boresight and steered at 30 degrees as well as different MPE evaluation distances, in this exemplary embodiment, 2 mm to 100 mm.

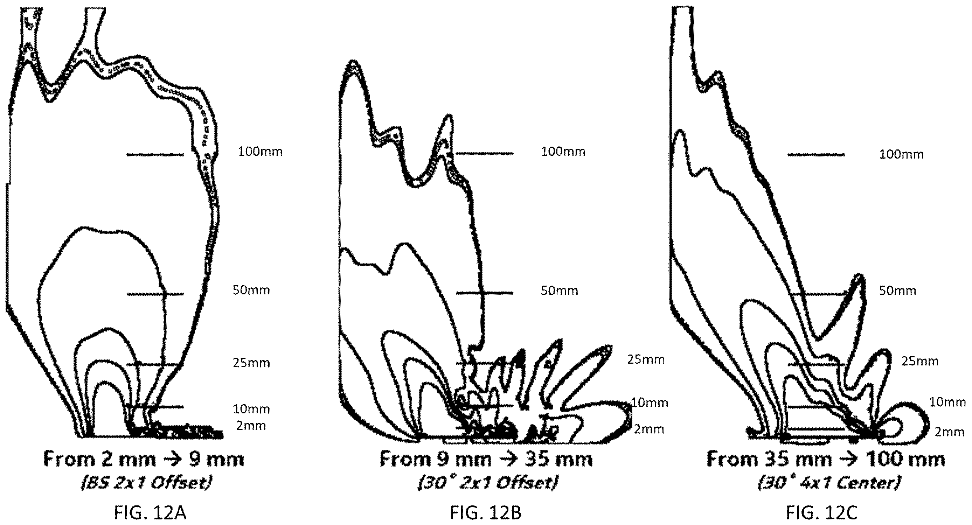

As is illustrated by FIG. 11, beam steering based on far-field pattern may in some example increase the near-field values. For, example, a 1x4 array steered at 30 degrees may increase near field value by 3.7 dB at 2 mm. Thus, a near-field approach is to be used to correctly configure the array to be compliant if MPE is to be limited while both maximizing the Total Radiated Power (TRP) and minimizing the radiation on the user. FIG. 11 also illustrates an example of configuring an antenna array with a 1x2 offset for boresight (BS) may decrease the field values on the user by 8.2 dB at 2 mm. It may be understood from this illustration that output power produced by the terminal device comprising the antenna arrays may be increased by up to approximately 8 dB for example while still following MPE limitations that are set by regulations. If a blockage, for example a user, is at 25 mm instead of 2 mm for example, the best array configuration to optimize output power while preserving radiation level on the user below the MPE limit in this example is to use the 1x2 offset steered at 30°. Also, in this example the output power produced by the terminal device may be increased by 12.1 dB to maximize probability of reaching an access node such as a gNB while preserving power density on the user below the required level. Also, it may be seen from the FIG. 11 that the best array configuration at 35 mm is a 1x4 center array steered a 30°. FIG. 12A-12C illustrate power density plots for different array configurations discussed above. The best array configuration may be chosen for different distances to the user. In FIG. 12A, the distance is from 2mm to 9mm and the antenna array configuration is 2x1 boresight offset. In FIG. 12B, the distance is from 9mm to 35mm and the antenna array configuration is 2x1 30° offset. In FIG. 12C, the distance is from 35mm to 100mm and the antenna array configuration is 4x1 30° offset.

To be able to apply correct antenna array configuration for near-field power measurements, the near field power measurements may performed on a reference terminal device for all usable array configurations and the measurement results may then be stored in all produced units of that device type. Thus, an individual terminal device may use this data as a lookup table to determine the optimum antenna array configuration and PA power setting for a blockage detected at a given location. The PA power setting may include a margin to ensure MPE limitation compliance with regulations that are applicable.

If a terminal device is not able to identify a location of the blockage, and the required power back-off, when MPE is applicable, is so large that an access node cannot receive an UL transmission transmitted by the terminal device, the terminal device may have to switch off the array entirely. Switching the communication to a new antenna array configuration on the terminal device may result in performing initial access and all alignment procedures from scratch which may be a lengthy and resource consuming procedure. Thus, the exemplary embodiments described above provide advantages in such a situation. For example, the antenna array may be reconfigured in a smart manner to continue using the same array and avoid switching off the array upon MPE events. Also, it is possible to comply with MPE limitations set by regulations while increasing PA power of the terminal device as well. Far-field radiation pattern for PA power or for EIRP may be optimized and transmission pattern of the terminal device may increase likelihood of an access node decoding PHR and MPE signalling.

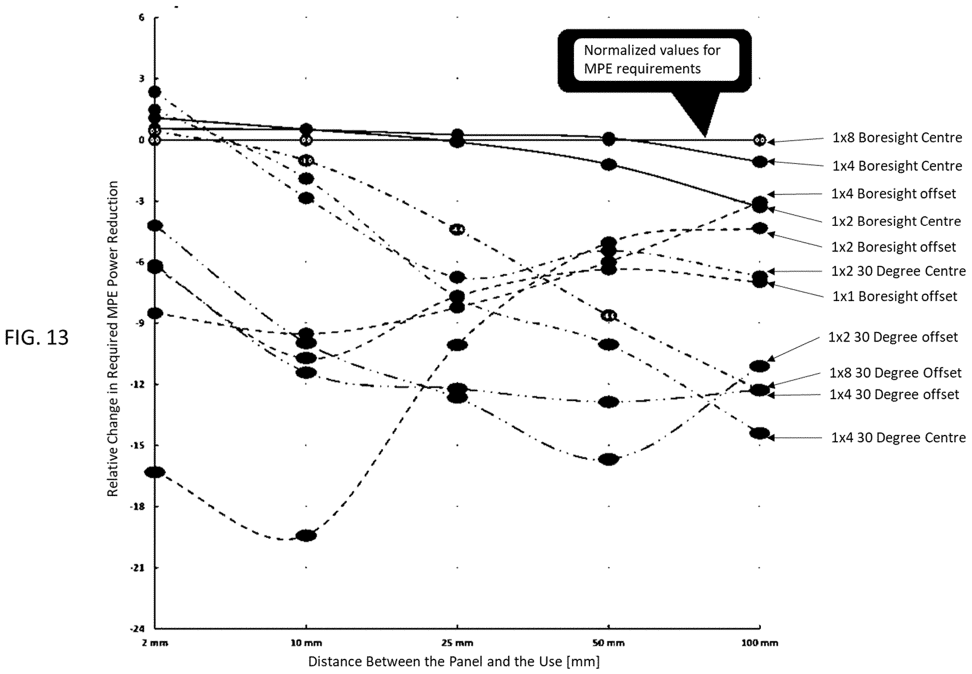

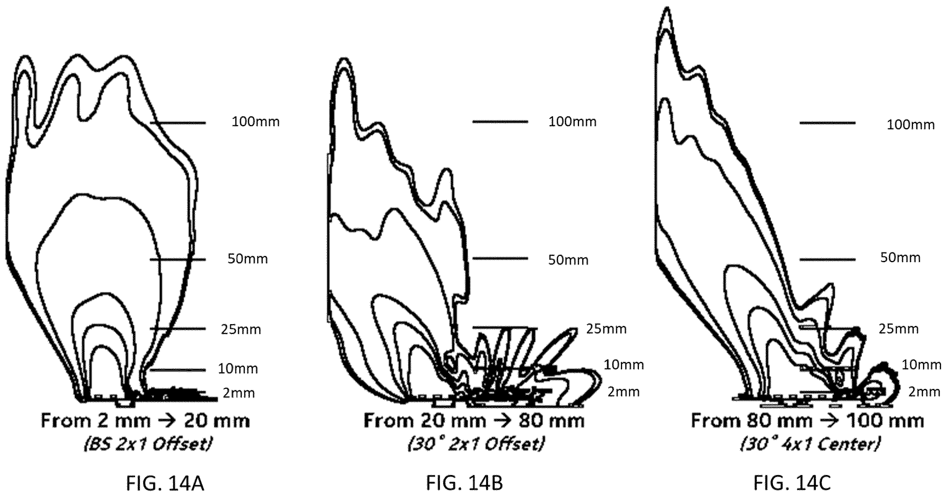

FIG. 13 and FIG. 14A-14C illustrate another example of evaluation of power density plots when MPE is to be limited. In FIG. 13 a relative change in required MPE power back off is illustrated for 10 mm offset MPE evaluation. As can be seen, in some examples the output power produced by the terminal device may be increased by for example 19 dB while still following MPE limitations. In FIG. 14A, the distance is from 2mm to 20mm and the antenna array configuration is 2x1 boresight offset. In FIG. 14B, the distance is from 20mm to 80mm and the antenna array configuration is 2x1 30° offset. In FIG. 14C, the distance is from 80mm to 100mm and the antenna array configuration is 4x1 30° offset.

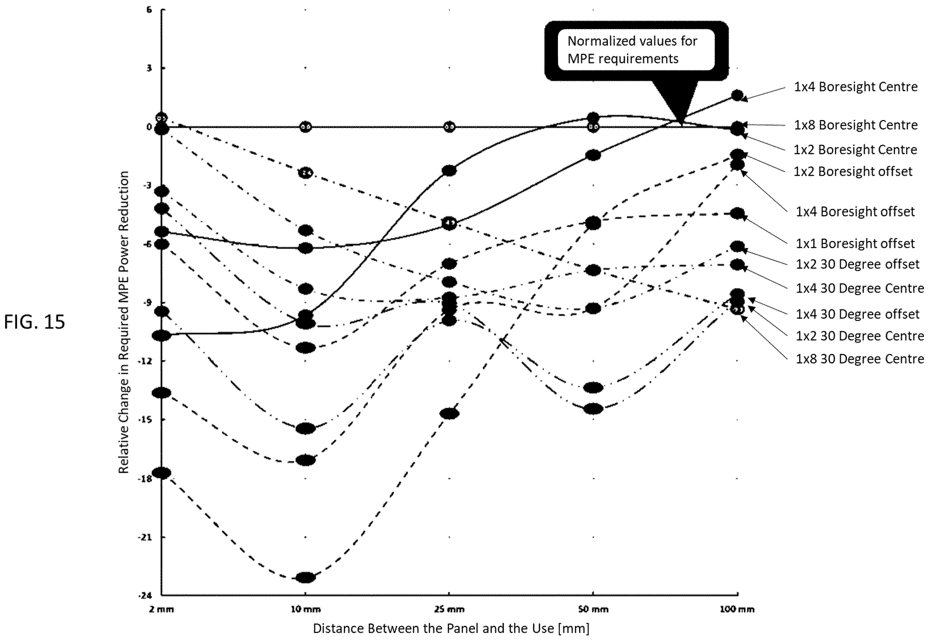

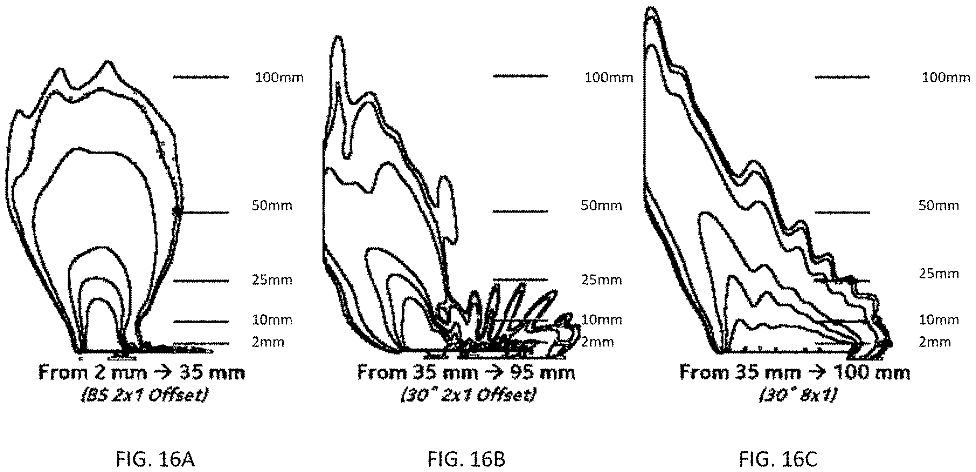

FIG. 15 and FIG. 16A-16C illustrate another example of evaluation of power density plots when MPE is to be limited. In FIG. 15 a relative change in required MPE power back off is illustrated for 20 mm offset MPE evaluation. As can be seen, in some examples the output power produced by the terminal device may be increased by for example more than 10 dB and up to 20 dB while still following MPE limitations. In FIG. 16A, the distance is from 2mm to 35mm and the antenna array configuration is 2x1 boresight offset. In FIG. 16B, the distance is from 35mm to 95mm and the antenna array configuration is 2x1 30° offset. In FIG. 16C, the distance is from 95mm to 100mm and the antenna array configuration is 8x1 30° offset.

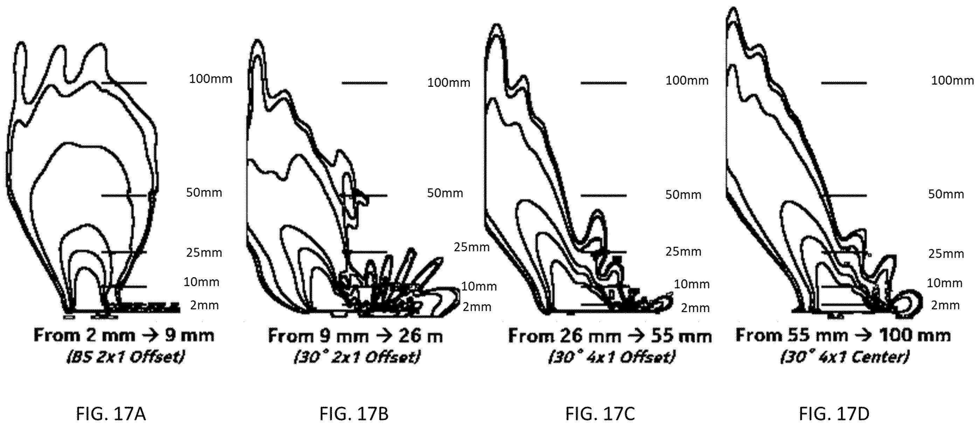

FIG. 17A-17D illustrate a power density plots when an antenna array is optimized with focus on maximum EIRP instead of on maximum TRP. In FIG. 17A the distance is from 2mm to 9mm and the antenna array configuration is 2x1 boresight offset. In FIG. 17B the distance is from 9mm to 26mm and the antenna array configuration is 2x1 30° offset. In FIG. 17C the distance is from 26mm to 55mm and the antenna array configuration is 4x1 30° offset. In FIG. 17D the distance is from 55mm to 100mm and the antenna array configuration is 4x1 30° centre.

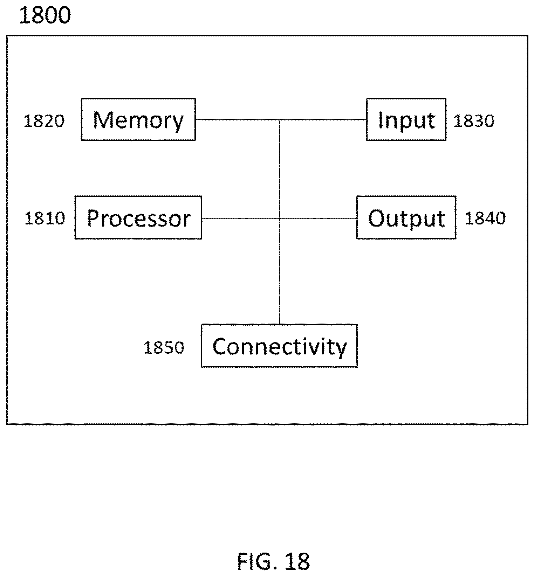

FIG. 18 illustrates an apparatus 1800, which may be an apparatus such as, or comprised in, a terminal device, according to an example embodiment. The apparatus 1800 comprises a processor 1810. The processor 1810 interprets computer program instructions and processes data. The processor 1810 may comprise one or more programmable processors. The processor 1810 may comprise programmable hardware with embedded firmware and may, alternatively or additionally, comprise one or more application specific integrated circuits, ASICs.

The processor 1810 is coupled to a memory 1820. The processor is configured to read and write data to and from the memory 1820. The memory 1820 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 1820 stores computer readable instructions that are execute by the processor 1810. For example, non-volatile memory stores the computer readable instructions and the processor 1810 executes the instructions using volatile memory for temporary storage of data and/or instructions

The computer readable instructions may have been pre-stored to the memory 1820 or, alternatively or additionally, they may be received, by the apparatus, via electromagnetic carrier signal and/or may be copied from a physical entity such as computer program product. Execution of the computer readable instructions causes the apparatus 1800 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 1800 further comprises, or is connected to, an input unit 1830. The input unit 1830 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 1830 may comprise an interface to which external devices may connect to.

The apparatus 1800 also comprises an output unit 1840. The output unit comprises or is connected to one or more displays capable of rendering visual content such as a light emitting diode, LED, display, a liquid crystal display, LCD. The output unit 1840 may further comprise one or more audio outputs. The one or more audio outputs may be for example loudspeakers or a set of headphones.

The apparatus 1800 may further comprise a connectivity unit 1850. The connectivity unit 1850 enables wired and/or wireless connectivity to external networks. The connectivity unit 1850 may comprise one or more antennas and one or more receivers that may be integrated to the apparatus 1800 or the apparatus 1800 may be connected to. The connectivity unit 1850 may comprise an integrated circuit or a set of integrated circuits that provide the wireless communication capability for the apparatus 1800. Alternatively, the wireless connectivity may be a hardwired application specific integrated circuit, ASIC.

It is to be noted that the apparatus 1800 may further comprise various component not illustrated in the FIG. 18. The various components may be hardware component and/or software components.

Among other advantages of the exemplary embodiments described above, when MPE is to be limited, the output power produced by a terminal device may yet be increased e.g. 8-19 dB, link budget may be improved, radio link failures may be avoided, beam failures may be avoided and/or overhead due to beam management may be reduced.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways within the scope of the claims. Further, it is clear to a person skilled in the art that the described embodiments may, but are not required to, be combined with other embodiments in various ways within the scope of the claims.

## Claims

1. An apparatus (100, 102, 1800) comprising:
means for measuring (720) a distance to a blockage using a radar functionality of an antenna array;
means for determining (730), based on the distance, that transmission power is to be limited due to a maximum permissible exposure event; **characterised by**
means for determining (740) whether the distance is greater or shorter than a threshold distance which corresponds to a far-field distance of a radiation pattern used for the radar functionality and performing one of the following:
in response to the distance being determined (740) as greater than the far-field distance, determining (750) an angular direction of an incoming signal comprised in the radar functionality and optimizing (790) the antenna array configuration for a beam used for uplink transmission to an access node, or
in response to the distance being determined (740, 760) as shorter than the far-field distance and the distance is greater than a minimum distance for obtaining reliable angular directions of the blockage using the radar functionality, reducing the number of elements used for the radar functionality, wherein the elements are comprised in the antenna array, measuring the distance to the blockage using the radar functionality of the antenna array, determining based on the distance, that the transmission power is to be limited due to the maximum permissible exposure event, determining that the distance is greater than the threshold distance which corresponds to the far-field distance of the radiation pattern used for the radar functionality, and determining (780) the angular direction of the incoming signal comprised in the radar functionality and optimizing (790) the antenna array configuration for the beam used for uplink transmission to the access node, or
in response to the distance being determined (740, 760) as shorter than the far-field distance and the distance is less than the minimum distance for obtaining reliable angular directions of the blockage using the radar functionality, determining (770) which elements, comprised in the antenna array, are covered by the blockage and optimizing (770) the antenna array configuration for a beam used for uplink transmission to an access node.

2. An apparatus (100, 102, 1800) according to claim 1, wherein the apparatus is further caused to maintain communication with the access node using the beam.

3. An apparatus (100, 102, 1800) according to claim 2, wherein the apparatus is further caused to maintain the communication with the access node using the beam if a threshold for switching to another beam is not exceeded.

4. An apparatus (100, 102, 1800) according to any previous claim, wherein the antenna array is optimized based, at least partly, on results obtained from near-field power density measurements performed using a reference terminal device.

5. An apparatus (100, 102, 1800) according to any previous claim, wherein optimizing the antenna array configuration comprises applying an angular direction configuration.

6. An apparatus (100, 102, 1800) according to claim 5, wherein the apparatus is further caused to combine the angular direction configuration with transmission power reduction.

7. An apparatus (100, 102, 1800) according to any previous claim, wherein the blockage is a user.

8. An apparatus (100, 102, 1800) according to any previous claim, wherein the apparatus is comprised in a terminal device that comprises the antenna array.

9. A method comprising:
measuring (720) a distance to a blockage using a radar functionality of an antenna array;
determining (730), based on the distance, that transmission power is to be limited due to a maximum permissible exposure event; **characterised by**
determining (740) whether the distance is greater or shorter than a threshold distance which corresponds to a far-field distance of a radiation pattern used for the radar functionality and performing one of the following:
in response to the distance being determined (740) as greater than the far-field distance, determining (750) an angular direction of an incoming signal comprised in the radar functionality and optimizing (790) the antenna array configuration for a beam used for uplink transmission to an access node; or
in response to the distance being determined (740, 760) as shorter than the far-field distance and the distance is greater than a minimum distance for obtaining reliable angular directions of the blockage using the radar functionality, reducing the number of elements used for the radar functionality, wherein the elements are comprised in the antenna array, measuring the distance to the blockage using the radar functionality of the antenna array, determining based on the distance, that the transmission power is to be limited due to the maximum permissible exposure event, determining that the distance is greater than the threshold distance which corresponds to the far-field distance of the radiation pattern used for the radar functionality, and determining (780) the angular direction of the incoming signal comprised in the radar functionality and optimizing (790) the antenna array configuration for the beam used for uplink transmission to the access node; or
in response to the distance being determined (740, 760) as shorter than the far-field distance and the distance is less than the minimum distance for obtaining reliable angular directions of the blockage using the radar functionality, determining (770) which elements, comprised in the antenna array, are covered by the blockage and optimizing (770) the antenna array configuration for a beam used for uplink transmission to an access node.

10. A method according to claim 9 further comprising maintaining communication with the access node using the beam.

11. A method according to claim 9 or 10, wherein the communication is maintained with the access node using the beam if a threshold for switching to another beam is not exceeded.

12. A method according to any of claims 9 to 11 further comprising optimizing the antenna array based, at least partly, on results obtained from near-field power density measurements performed using a reference terminal device.

13. A method according to any of claims 9 to 12, wherein optimizing the antenna array configuration comprises applying an angular direction configuration.

14. A method according to claim 13, further comprising combining the angular direction configuration with transmission power reduction.

15. A computer program product comprising instructions for causing an apparatus to perform at least the following:
measure (720) a distance to a blockage using a radar functionality of an antenna array;
determine (730), based on the distance, that transmission power is to be limited due to a maximum permissible exposure event; further characterised to
determine (740) whether the distance is greater or shorter than a threshold distance which corresponds to a far-field distance of a radiation pattern used for the radar functionality and perform one of the following:
in response to the distance being determined (740) as greater than the far-field distance, determine (750) an angular direction of an incoming signal comprised in the radar functionality and optimize (790) the antenna array configuration for a beam used for uplink transmission to an access node; or
in response to the distance being determined (740, 760) as shorter than the far-field distance and the distance is greater than a minimum distance for obtaining reliable angular directions of the blockage using the radar functionality, reduce the number of elements used for the radar functionality, wherein the elements are comprised in the antenna array, measure the distance to the blockage using the radar functionality of the antenna array, determine based on the distance, that the transmission power is to be limited due to the maximum permissible exposure event, determine that the distance is greater than the threshold distance which corresponds to the far-field distance of the radiation pattern used for the radar functionality, and determine (780) the angular direction of the incoming signal comprised in the radar functionality and optimize (790) the antenna array configuration for the beam used for uplink transmission to the access node; or
in response to the distance being determined (740, 760) as shorter than the far-field distance and the distance is less than the minimum distance for obtaining reliable angular directions of the blockage using the radar functionality, determine (770) which elements, comprised in the antenna array, are covered by the blockage and optimize (770) the antenna array configuration for a beam used for uplink transmission to an access node.

## Patentansprüche

1. Vorrichtung (100, 102, 1800) umfassend:
Mittel zum Messen (720) einer Entfernung zu einer Blockierung unter Verwendung einer Radarfunktionalität eines Antennenarrays;
Mittel zum Bestimmen (730), basierend auf der Entfernung, dass die Sendeleistung aufgrund eines maximal zulässigen Expositionsereignisses zu begrenzen ist; **gekennzeichnet durch**
Mittel zum Bestimmen (740), ob die Entfernung größer oder kleiner als eine Schwellenentfernung ist, die einer Fernfeldentfernung eines für die Radarfunktionalität verwendeten Strahlungsmusters entspricht, und zum Durchführen eines der folgenden Schritte:
als Reaktion darauf, dass die Entfernung als größer als die Fernfeldentfernung bestimmt wird (740), Bestimmen (750) einer Winkelrichtung eines ankommenden Signals, das in der Radarfunktionalität enthalten ist, und Optimieren (790) des Antennenarray-Konfiguration für einen Strahl, der für die Uplink-Übertragung zu einem Zugangsknoten verwendet wird, oder
als Reaktion darauf, dass die Entfernung als kürzer als die Fernfeldentfernung bestimmt wird (740, 760) und die Entfernung größer als eine Mindestentfernung zum Erhalten zuverlässiger Winkelrichtungen der Blockierung unter Verwendung der Radarfunktionalität ist, Reduzieren der Anzahl von Elementen, die für die Radarfunktionalität verwendet werden, wobei die Elemente in dem Antennenarray enthalten sind, Messen der Entfernung zu der Blockierung unter Verwendung der Radarfunktionalität des Antennenarrays, Bestimmen, basierend auf der Entfernung, dass die Sendeleistung aufgrund des maximal zulässigen Expositionsereignisses zu begrenzen ist, Bestimmen, dass die Entfernung größer als die Schwellenentfernung ist, die der Fernfeldentfernung des für die Radarfunktionalität verwendeten Strahlungsmusters entspricht, und Bestimmen (780) der Winkelrichtung des ankommenden Signals, das in der Radarfunktionalität enthalten ist, und Optimieren (790) der Antennenarray-Konfiguration für den Strahl, der für die Uplink-Übertragung zu dem Zugangsknoten verwendet wird, oder
als Reaktion darauf, dass die Entfernung als kürzer als die Fernfeldentfernung bestimmt wird (740, 760) und die Entfernung kleiner als die Mindestentfernung zum Erhalten zuverlässiger Winkelrichtungen der Blockierung unter Verwendung der Radarfunktionalität ist, Bestimmen (770), welche Elemente, die in dem Antennenarray enthalten sind, von der Blockierung abgedeckt werden, und Optimieren (770) der Antennenarray-Konfiguration für einen Strahl, der für die Uplink-Übertragung zu einem Zugangsknoten verwendet wird.

2. Vorrichtung (100, 102, 1800) nach Anspruch 1, wobei die Vorrichtung ferner dazu veranlasst wird, die Kommunikation mit dem Zugangsknoten unter Verwendung des Strahls aufrechtzuerhalten.

3. Vorrichtung (100, 102, 1800) nach Anspruch 2, wobei die Vorrichtung ferner veranlasst wird, die Kommunikation mit dem Zugangsknoten unter Verwendung des Strahls aufrechtzuerhalten, wenn ein Schwellenwert zum Umschalten auf einen anderen Strahl nicht überschritten wird.

4. Vorrichtung (100, 102, 1800) nach einem der vorstehenden Ansprüche, wobei das Antennenarray zumindest teilweise basierend auf Ergebnissen optimiert wird, die aus Nahfeld-Leistungsdichtemessungen erhalten wurden, die unter Verwendung eines Referenz-Endgeräts durchgeführt wurden.

5. Vorrichtung (100, 102, 1800) nach einem der vorstehenden Ansprüche, wobei das Optimieren der Antennenarray-Konfiguration das Anwenden einer Winkelrichtungskonfiguration umfasst.

6. Vorrichtung (100, 102, 1800) nach Anspruch 5, wobei die Vorrichtung ferner dazu veranlasst wird, die Winkelrichtungskonfiguration mit einer Reduzierung der Sendeleistung zu kombinieren.

7. Vorrichtung (100, 102, 1800) nach einem der vorstehenden Ansprüche, wobei die Blockierung ein Benutzer ist.

8. Vorrichtung (100, 102, 1800) nach einem der vorstehenden Ansprüche, wobei die Vorrichtung in einem Endgerät enthalten ist, das das Antennenarray umfasst.

9. Verfahren, umfassend:
Messen (720) einer Entfernung zu einer Blockierung unter Verwendung einer Radarfunktionalität eines Antennenarrays;
Bestimmen (730), basierend auf der Entfernung, dass die Sendeleistung aufgrund eines maximal zulässigen Expositionsereignisses zu begrenzen ist;
**gekennzeichnet durch**
Bestimmen (740), ob die Entfernung größer oder kleiner als eine Schwellenentfernung ist, die einer Fernfeldentfernung eines für die Radarfunktionalität verwendeten Strahlungsmusters entspricht, und zum Durchführen eines der folgenden Schritte:
als Reaktion darauf, dass die Entfernung als größer als die Fernfeldentfernung bestimmt wird (740), Bestimmen (750) einer Winkelrichtung eines ankommenden Signals, das in der Radarfunktionalität enthalten ist, und Optimieren (790) des Antennenarray-Konfiguration für einen Strahl, der für die Uplink-Übertragung zu einem Zugangsknoten verwendet wird, oder
als Reaktion darauf, dass die Entfernung als kürzer als die Fernfeldentfernung bestimmt wird (740, 760) und die Entfernung größer als eine Mindestentfernung zum Erhalten zuverlässiger Winkelrichtungen der Blockierung unter Verwendung der Radarfunktionalität ist, Reduzieren der Anzahl von Elementen, die für die Radarfunktionalität verwendet werden, wobei die Elemente in dem Antennenarray enthalten sind, Messen der Entfernung zu der Blockierung unter Verwendung der Radarfunktionalität des Antennenarrays, Bestimmen, basierend auf der Entfernung, dass die Sendeleistung aufgrund des maximal zulässigen Expositionsereignisses zu begrenzen ist, Bestimmen, dass die Entfernung größer als die Schwellenentfernung ist, die der Fernfeldentfernung des für die Radarfunktionalität verwendeten Strahlungsmusters entspricht, und Bestimmen (780) der Winkelrichtung des ankommenden Signals, das in der Radarfunktionalität enthalten ist, und Optimieren (790) der Antennenarray-Konfiguration für den Strahl, der für die Uplink-Übertragung zu dem Zugangsknoten verwendet wird, oder
als Reaktion darauf, dass die Entfernung als kürzer als die Fernfeldentfernung bestimmt wird (740, 760) und die Entfernung kleiner als die Mindestentfernung zum Erhalten zuverlässiger Winkelrichtungen der Blockierung unter Verwendung der Radarfunktionalität ist, Bestimmen (770), welche Elemente, die in dem Antennenarray enthalten sind, von der Blockierung abgedeckt werden, und Optimieren (770) der Antennenarray-Konfiguration für einen Strahl, der für die Uplink-Übertragung zu einem Zugangsknoten verwendet wird.

10. Verfahren nach Anspruch 9, ferner umfassend das Aufrechterhalten der Kommunikation mit dem Zugangsknoten unter Verwendung des Strahls.

11. Verfahren nach Anspruch 9 oder 10, wobei die Kommunikation mit dem Zugangsknoten unter Verwendung des Strahls aufrechterhalten wird, wenn ein Schwellenwert zum Umschalten auf einen anderen Strahl nicht überschritten wird.

12. Verfahren nach einem der Ansprüche 9 bis 11, ferner umfassend das Optimieren des Antennenarrays zumindest teilweise basierend auf Ergebnissen, die aus Nahfeld-Leistungsdichtemessungen erhalten wurden, die unter Verwendung eines Referenz-Endgeräts durchgeführt wurden.

13. Verfahren nach einem nach einem der Ansprüche 9 bis 12, wobei das Optimieren der Antennenarray-Konfiguration das Anwenden einer Winkelrichtungskonfiguration umfasst.

14. Verfahren nach Anspruch 13, ferner umfassend das Kombinieren der Winkelrichtungskonfiguration mit einer Reduzierung der Sendeleistung.

15. Computerprogrammprodukt mit Anweisungen zum Veranlassen einer Vorrichtung, mindestens Folgendes auszuführen:
Messen (720) einer Entfernung zu einer Blockierung unter Verwendung einer Radarfunktionalität eines Antennenarrays;
Bestimmen (730), basierend auf der Entfernung, dass die Sendeleistung aufgrund eines maximal zulässigen Expositionsereignisses zu begrenzen ist; ferner **gekennzeichnet durch**
Bestimmen (740), ob die Entfernung größer oder kleiner als eine Schwellenentfernung ist, die einer Fernfeldentfernung eines für die Radarfunktionalität verwendeten Strahlungsmusters entspricht, und zum Durchführen eines der folgenden Schritte:
als Reaktion darauf, dass die Entfernung als größer als die Fernfeldentfernung bestimmt wird (740), Bestimmen (750) einer Winkelrichtung eines ankommenden Signals, das in der Radarfunktionalität enthalten ist, und Optimieren (790) des Antennenarray-Konfiguration für einen Strahl, der für die Uplink-Übertragung zu einem Zugangsknoten verwendet wird, oder
als Reaktion darauf, dass die Entfernung als kürzer als die Fernfeldentfernung bestimmt wird (740, 760) und die Entfernung größer als eine Mindestentfernung zum Erhalten zuverlässiger Winkelrichtungen der Blockierung unter Verwendung der Radarfunktionalität ist, Reduzieren der Anzahl von Elementen, die für die Radarfunktionalität verwendet werden, wobei die Elemente in dem Antennenarray enthalten sind, Messen der Entfernung zu der Blockierung unter Verwendung der Radarfunktionalität des Antennenarrays, Bestimmen, basierend auf der Entfernung, dass die Sendeleistung aufgrund des maximal zulässigen Expositionsereignisses zu begrenzen ist, Bestimmen, dass die Entfernung größer als die Schwellenentfernung ist, die der Fernfeldentfernung des für die Radarfunktionalität verwendeten Strahlungsmusters entspricht, und Bestimmen (780) der Winkelrichtung des ankommenden Signals, das in der Radarfunktionalität enthalten ist, und Optimieren (790) der Antennenarray-Konfiguration für den Strahl, der für die Uplink-Übertragung zu dem Zugangsknoten verwendet wird, oder
als Reaktion darauf, dass die Entfernung als kürzer als die Fernfeldentfernung bestimmt wird (740, 760) und die Entfernung kleiner als die Mindestentfernung zum Erhalten zuverlässiger Winkelrichtungen der Blockierung unter Verwendung der Radarfunktionalität ist, Bestimmen (770), welche Elemente, die in dem Antennenarray enthalten sind, von der Blockierung abgedeckt werden, und Optimieren (770) der Antennenarray-Konfiguration für einen Strahl, der für die Uplink-Übertragung zu einem Zugangsknoten verwendet wird.

## Revendications

1. Appareil (100, 102, 1800) comprenant :
des moyens pour mesurer (720) une distance par rapport à une obstruction en utilisant une fonctionnalité radar d'un réseau d'antennes ;
des moyens pour déterminer (730) sur la base de la distance qu'une puissance de transmission doit être limitée en raison d'un événement d'exposition admissible maximale ; **caractérisé par**
des moyens pour déterminer (740) si la distance est supérieure ou inférieure à une distance seuil qui correspond à une distance de champ lointain d'un motif de rayonnement utilisé pour la fonctionnalité radar, et réaliser l'une des opérations suivantes :
lorsqu'il est déterminé que la distance déterminée (740) est supérieure à la distance de champ lointain, déterminer (750) une direction angulaire d'un signal entrant compris dans la fonctionnalité radar et optimiser (790) la configuration de réseau d'antennes pour un faisceau utilisé pour une transmission de liaison montante à un nœud d'accès, ou
en réponse à la détermination de la distance (740, 760) comme étant inférieure à la distance de champ lointain et lorsque la distance est supérieure à une distance minimale pour obtenir des directions angulaires fiables de l'obstruction en utilisant la fonctionnalité radar, réduire le nombre d'éléments utilisés pour la fonctionnalité radar, les éléments étant compris dans le réseau d'antennes, mesurer la distance par rapport à l'obstruction en utilisant la fonctionnalité radar du réseau d'antennes, déterminer sur la base de la distance que la puissance de transmission doit être limitée en raison de l'événement d'exposition admissible maximale, déterminer que la distance est supérieure à la distance seuil qui correspond à la distance de champ lointain du motif de rayonnement utilisé pour la fonctionnalité radar, et déterminer (780) la direction angulaire du signal entrant compris dans la fonctionnalité radar et optimiser (790) la configuration de réseau d'antennes pour le faisceau utilisé pour une transmission de liaison montante au nœud d'accès, ou
en réponse à la détermination de la distance (740, 760) comme étant inférieure à la distance de champ lointain et lorsque la distance est inférieure à la distance minimale pour obtenir des directions angulaires fiables de l'obstruction en utilisant la fonctionnalité radar, déterminer (770) quels éléments compris dans le réseau d'antennes sont couverts par l'obstruction et optimiser (770) la configuration de réseau d'antennes pour un faisceau utilisé pour une transmission de liaison montante à un nœud d'accès.

2. Appareil (100, 102, 1800) selon la revendication 1, dans lequel l'appareil est en outre amené à maintenir la communication avec le nœud d'accès en utilisant le faisceau.

3. Appareil (100, 102, 1800) selon la revendication 2, dans lequel l'appareil est en outre amené à maintenir la communication avec le nœud d'accès en utilisant le faisceau si un seuil de commutation vers un autre faisceau n'est pas dépassé.

4. Appareil (100, 102, 1800) selon l'une des revendications précédentes, dans lequel le réseau d'antennes est optimisé en se basant au moins en partie sur des résultats obtenus à partir de mesures de densité de puissance en champ proche effectuées en utilisant un dispositif terminal de référence.

5. Appareil (100, 102, 1800) selon l'une des revendications précédentes, dans lequel l'optimisation de la configuration de réseau d'antennes comprend l'application d'une configuration de direction angulaire.

6. Appareil (100, 102, 1800) selon la revendication 5, dans lequel l'appareil est en outre amené à combiner la configuration de direction angulaire avec une réduction de puissance de transmission.

7. Appareil (100, 102, 1800) selon l'une des revendications précédentes, dans lequel l'obstruction est un utilisateur.

8. Appareil (100, 102, 1800) selon l'une des revendications précédentes, dans lequel l'appareil est compris dans un dispositif terminal qui comprend le réseau d'antennes.

9. Procédé comprenant les étapes suivantes :
mesurer (720) une distance par rapport à une obstruction en utilisant une fonctionnalité radar d'un réseau d'antennes ;
déterminer (730) sur la base de la distance qu'une puissance de transmission doit être limitée en raison d'un événement d'exposition admissible maximale ; **caractérisé par** le fait de déterminer (740) si la distance est supérieure ou inférieure à une distance seuil qui correspond à une distance de champ lointain d'un motif de rayonnement utilisé pour la fonctionnalité radar et réaliser l'une des opérations suivantes :
lorsqu'il est déterminé que la distance déterminée (740) est supérieure à la distance de champ lointain, déterminer (750) une direction angulaire d'un signal entrant compris dans la fonctionnalité radar et optimiser (790) la configuration de réseau d'antennes pour un faisceau utilisé pour une transmission de liaison montante à un nœud d'accès ; ou
en réponse à la détermination de la distance (740, 760) comme étant inférieure à la distance de champ lointain et lorsque la distance est supérieure à une distance minimale pour obtenir des directions angulaires fiables de l'obstruction en utilisant la fonctionnalité radar, réduire le nombre d'éléments utilisés pour la fonctionnalité radar, les éléments étant compris dans le réseau d'antennes, mesurer la distance par rapport à l'obstruction en utilisant la fonctionnalité radar du réseau d'antennes, déterminer sur la base de la distance que la puissance de transmission doit être limitée en raison de l'événement d'exposition admissible maximale, déterminer que la distance est supérieure à la distance seuil qui correspond à la distance de champ lointain du motif de rayonnement utilisé pour la fonctionnalité radar, et déterminer (780) la direction angulaire du signal entrant compris dans la fonctionnalité radar et optimiser (790) la configuration de réseau d'antennes pour le faisceau utilisé pour une transmission de liaison montante au nœud d'accès ; ou
en réponse à la détermination de la distance (740, 760) comme étant inférieure à la distance de champ lointain et lorsque la distance est inférieure à la distance minimale pour obtenir des directions angulaires fiables de l'obstruction en utilisant la fonctionnalité radar, déterminer (770) quels éléments compris dans le réseau d'antennes sont couverts par l'obstruction et optimiser (770) la configuration de réseau d'antennes pour un faisceau utilisé pour une transmission de liaison montante à un nœud d'accès.

10. Procédé selon la revendication 9, comprenant en outre le maintien de la communication avec le nœud d'accès en utilisant le faisceau.

11. Procédé selon la revendication 9 ou 10, dans lequel la communication est maintenue avec le nœud d'accès en utilisant le faisceau si un seuil de commutation vers un autre faisceau n'est pas dépassé.

12. Procédé selon l'une des revendications 9 à 11, comprenant en outre l'optimisation du réseau d'antennes en se basant au moins en partie sur des résultats obtenus à partir de mesures de densité de puissance en champ proche effectuées en utilisant un dispositif terminal de référence.

13. Procédé selon l'une des revendications 9 à 12, dans lequel l'optimisation de la configuration de réseau d'antennes comprend l'application d'une configuration de direction angulaire.

14. Procédé selon la revendication 13, comprenant en outre la combinaison de la configuration de direction angulaire avec une réduction de puissance de transmission.

15. Produit de programme informatique comprenant des instructions pour amener un appareil à effectuer au moins les opérations suivantes :
mesurer (720) une distance par rapport à une obstruction en utilisant une fonctionnalité radar d'un réseau d'antennes ;
déterminer (730) sur la base de la distance qu'une puissance de transmission doit être limitée en raison d'un événement d'exposition admissible maximale ; caractérisé en outre pour
déterminer (740) si la distance est supérieure ou inférieure à une distance seuil qui correspond à une distance de champ lointain d'un motif de rayonnement utilisé pour la fonctionnalité radar, et réaliser l'une des opérations suivantes :
lorsqu'il est déterminé que la distance déterminée (740) est supérieure à la distance de champ lointain, déterminer (750) une direction angulaire d'un signal entrant compris dans la fonctionnalité radar et optimiser (790) la configuration de réseau d'antennes pour un faisceau utilisé pour une transmission de liaison montante à un nœud d'accès ; ou
en réponse à la détermination de la distance (740, 760) comme étant inférieure à la distance de champ lointain et lorsque la distance est supérieure à une distance minimale pour obtenir des directions angulaires fiables de l'obstruction en utilisant la fonctionnalité radar, réduire le nombre d'éléments utilisés pour la fonctionnalité radar, les éléments étant compris dans le réseau d'antennes, mesurer la distance par rapport à l'obstruction en utilisant la fonctionnalité radar du réseau d'antennes, déterminer sur la base de la distance que la puissance de transmission doit être limitée en raison de l'événement d'exposition admissible maximale, déterminer que la distance est supérieure à la distance seuil qui correspond à la distance de champ lointain du motif de rayonnement utilisé pour la fonctionnalité radar, et déterminer (780) la direction angulaire du signal entrant compris dans la fonctionnalité radar et optimiser (790) la configuration de réseau d'antennes pour le faisceau utilisé pour une transmission de liaison montante au nœud d'accès ; ou
en réponse à la détermination de la distance (740, 760) comme étant inférieure à la distance de champ lointain et lorsque la distance est inférieure à la distance minimale pour obtenir des directions angulaires fiables de l'obstruction en utilisant la fonctionnalité radar, déterminer (770) quels éléments compris dans le réseau d'antennes sont couverts par l'obstruction et optimiser (770) la configuration de réseau d'antennes pour un faisceau utilisé pour une transmission de liaison montante à un nœud d'accès.
